# EUROPÄISCHE PATENTSCHRIFT

(11) **EP 2 404 054 B1**
(45) Veröffentlichungstag und Bekanntmachung des Hinweises auf die Patenterteilung: **03.09.2014**
(21) Anmeldenummer: 11712772.0
(22) Anmeldetag: 05.04.2011
(51) Int. Cl.: F03B 13/08, E02B 9/02, E02B 9/04, F03B 13/10

(54) **FLUSSKRAFTWERK**
RUN-OF-RIVER POWER PLANT
CENTRALE HYDROÉLECTRIQUE

(30) Priorität: 29.04.2010 DE 102010018806
(43) Veröffentlichungstag der Anmeldung: 11.01.2012
(73) Patentinhaber: Voith Patent GmbH, 89522 Heidenheim (DE)
(72) Erfinder: HOLSTEIN, Benjamin, 89518 Heidenheim (DE); LOCHSCHMIDT, Jörg, 89231 Neu Ulm (DE); BRONOWSKI, Helmut, 89522 Heidenheim (DE)
(74) Vertreter: Dr. Weitzel & Partner
(86) Internationale Anmeldenummer: PCT/EP2011/001675
(87) Internationale Veröffentlichungsnummer: WO 2011/134585

(56) Entgegenhaltungen:
- EP-A1- 1 455 087
- DE-A1- 3 637 083
- DE-A1- 10 231 744
- FR-A1- 2 865 226
- JP-A- 57 124 076

## Beschreibung

Die Erfindung betrifft ein Flusskraftwerk zum Ausnutzen der Energie des strömenden Wassers.

Solche Flusskraftwerke gibt es in einer großen Anzahl von Variationen (siehe z.B. FR 2 865 226 A).

Die Erfindung betrifft ein Flusskraftwerk, das sich auch für Flüsse mit geringem Energieaufkommen einsetzen lässt. Hauptsächlich handelt es sich um Kraftwerke mit geringer Fallhöhe und hohem Volumenstrom, sogenannte Laufwasserkraftwerke. Die Kraftwerke sollen so ausgeführt werden, dass sie zum großen Teil überströmt sind und somit dem Auge des Betrachters verborgen bleiben und den Lauf des Flusses im Falle eines Hochwassers wenig beeinträchtigen. Bei solchen Anwendungsfällen muss mit jahreszeitlich bedingt unregelmäßigen Aufkommen der Wassermenge gerechnet werden, zugleich auch mit störenden Partikeln, die von der Strömung mitgerissen werden, wie Steinen, Treibholz und so weiter. Es wird daher eine Lösung angestrebt, die möglichst einfach und wenig störanfällig ist.

Der Bau von Flusskraftwerken ist grundsätzlich sehr aufwändig. Dabei lässt sich der Aufwand nicht im Voraus genau erfassen. Eine wichtige Größe ist zum Beispiel die Beschaffenheit des Flussbettes. Besteht dieses aus Felsboden, so ist der Aufwand besonders hoch. Weiterhin sind beim Bau umfangreiche Maßnahmen notwendig wie das Umleiten des gesamten Flusses aus dem angestammten Flussbett durch ein künstlich geschaffenes Bett. Manchmal wird auch ein Teilstrom umgeleitet, sodass ein Teil des Flussbettes zum Zwecke des Baus des Kraftwerkes trockengelegt werden kann. Alle diese Maßnahmen sind außerordentlich aufwändig.

Der Erfindung liegt die Aufgabe zugrunde, ein Flusskraftwerk anzugeben, das einfach im Aufbau ist, das kostengünstig erstellbar ist, das unempfindlich gegenüber sogenanntem Geschiebe ist wie Steinen, Treibholz, und das sich leicht und schnell sowie kostengünstig errichten lässt. Nach Möglichkeit soll auf die oben genannte Baugrubenumschließung verzichtet werden.

Diese Aufgabe wird mit den Merkmalen des unabhängigen Anspruchs 1 gelöst.

Der wesentliche Gedanke des unabhängigen Vorrichtungsanspruches besteht darin, eine Mehrzahl von Modulen zu schaffen, die quer zur Strömungsrichtung nebeneinander angeordnet sind. Jedes Modul trägt wenigstens eine Energieeinheit, umfassend eine Turbine und einen Generator. An die Energieeinheit schließt sich in üblicher Weise ein Saugrohr oder Saugkanal an.

Der sonst übliche Staudamm, der mehrere Energieeinheiten aufnimmt, ist somit sektioniert. Jedes Modul lässt sich somit ganz autark und für sich alleine errichten, unabhängig von dem benachbarten Modul. So kann ein Modul nach dem anderen errichtet werden. Dabei geht man zweckmäßigerweise von einem ersten Modul in Ufernähe aus, erstellt sodann das nächstfolgende, benachbarte Modul, und so weiter.

Die Erfindung ist anhand der Zeichnung näher erläutert. Darin ist im Einzelnen folgendes dargestellt:
- Figur 1: zeigt in schematischer Darstellung in einer Aufrissansicht ein Flusskraftwerk.
- Figur 2: zeigt wesentliche Teile eines weiteren Flusskraftwerkes im Aufriss.
- Figur 3: zeigt ein drittes Flusskraftwerk im Aufriss.
- Figur 4: zeigt wesentliche Teile eines Moduls aus Beton.
- Figur 5: zeigt drei nebeneinander angeordnete Module in perspektivischer Darstellung.
- Figur 6: zeigt drei weitere, nebeneinander angeordnete Module in perspektivischer Darstellung.
- Figuren 7 bis 10: veranschaulichen wesentliche Schritte eines ersten Verfahrens zum Errichten eines erfindungsgemäßen Moduls in einem Flussbett.
- Figuren 11 bis 14: veranschaulichen die wesentlichen Schritte eines zweiten Herstellungsverfahrens zum Errichten eines erfindungsgemäßen Moduls in einem Flussbett.
- Figur 15: zeigt ein nicht erfindungsgemässes Modul, das mittels Pfählen auf dem Flussbett angeordnet und fixiert ist, mit Blickrichtung in Strömungsrichtung.
- Figur 16: zeigt einen Gegenstand ähnlich wie einer gemäß Figur 15, jedoch mit zwei nicht erfindungsgemässen Modulen.
- Figur 17: zeigt in perspektivischer Darstellung ein Fertigteil, das Bestandteil einesnicht erfindungsgemässen Moduls ist.
- Figur 18: zeigt den Gegenstand von Figur 15 in Seitenansicht.
- Figuren 19, 20, 21: zeigen in einer Aufrissansicht ein weiteres Wasserkraftwerk, und zwar in drei verschiedenen Betriebsphasen.

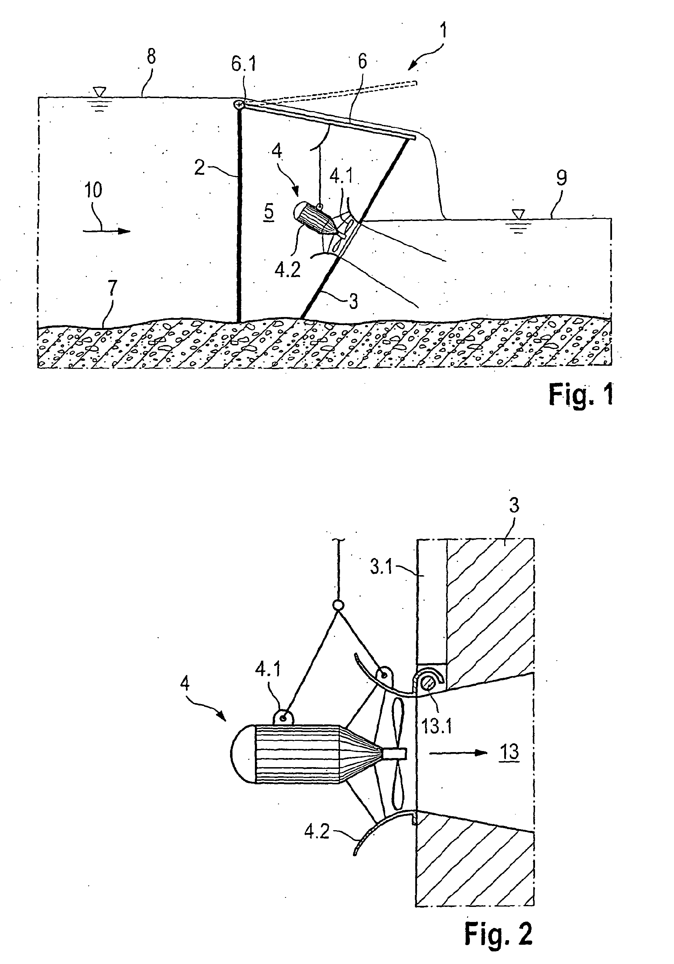

Die Figur 1 zeigt ein erfindungsgemäßes Modul 1. Dieses umfasst eine Stauwand 2, eine Tragwand 3 sowie eine von der Tragwand 3 getragene Energieeinheit 4. Die Energieeinheit 4 umfasst eine Turbine 4.1 sowie einen Generator 4.2. Beide haben eine gemeinsame Drehachse.

Zwischen Stauwand 2 und Tragwand 3 befindet sich ein Zwischenraum 5. Dieser ist von einem Rechen 6 abdeckbar. Der Rechen ist an der Oberkante der Stauwand 2 angelenkt und um den Gelenkpunkt 6.1 schwenkbar. Die gestrichelte Linie zeigt den Rechen 6 in einer angehobenen Position. Der Rechen kann zum Demontieren der Turbine noch weiter nach oben gehoben werden. Der Rechenanschlagpunkt 6.1 kann ebenso gut an der Tragwand 3 angebracht sein.

Stauwand 2 und Tragwand 3 sind im Flussbett 7 verankert. Das Oberwasser 8 wird an der Stauwand 2 aufgestaut. Es strömt über den Rechen 6 und fällt von der Oberkante der Tragwand 3 hinab zum Unterwasser 9. Der Fluss strömt in Richtung des Pfeiles 10. Der Rechen 6 ist während des Betriebs vorteilhafterweise zum Unterwasser hin geneigt. Der Schmutz wird entlang der Rechenstäbe in das Unterwasser 9 gezogen. Auf eine gesonderte Rechenreinigungsmaschine kann verzichtet werden.

In Figur 2 erkennt man wiederum eine Tragwand 3, gebildet aus einem Betonkörper, sowie einer Energieeinheit 4.

Die Energieeinheit 4 ist am oberen Ende der Einlassöffnung des Saugkanales 13 eingehängt. Siehe Einhängezapfen 13.1. Die Energieeinheit 4 weist am Generatorgehäuse einen Kranhaken 4.1 auf, um bei Wartungsarbeiten oder dergleichen hochgezogen zu werden. Die Einlassöffnung des Saugkanales 13 ist als Sitz ausgebildet. Sie weist einen kreisförmigen Sitzkörper auf - nicht dargestellt -, auf welcher das Gehäuse der Energieeinheit 4 im Betriebszustand ruht.

Die Tragwand 3 weist eine vertikale Führungsnut 3.1 auf. In dieser kann ein Einhängehaken, der Bestandteil eines Einlauftrichters 4.2 ist, auf und ab fahren. In der hier dargestellten unteren Position umgreift der Haken den Einhängezapfen 13.1. Die Führungsnut erleichtert die Montage der Turbine mittels eines Krans.

Bei dieser Konstruktion muss die Energieeinheit 4 nicht weiter fixiert werden. Sie wird aufgrund ihres Gewichtes in Kombination mit dem geeignet positionierten Einhängezapfen 13.1 gegen den Sitz an der Einlassöffnung des Saugkanales gepresst.

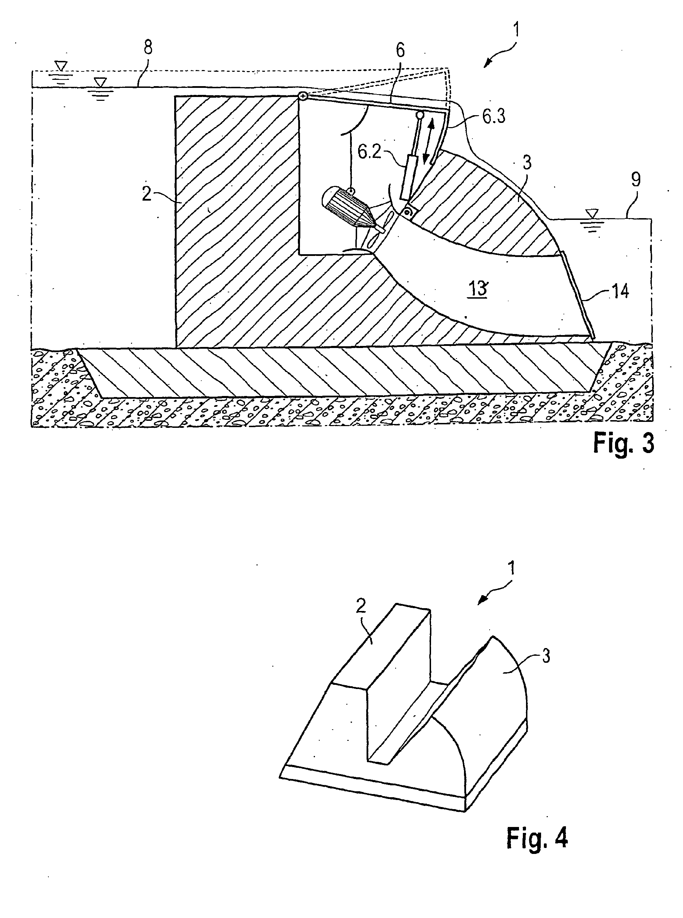

Modul 1 gemäß Figur 3 ist im Wesentlichen gleich aufgebaut, wie Modul 1 gemäß Figur 2. Der Saugkanal 13 ist jedoch leicht gekrümmt. Rechen 6 ist mittels einer Hubeinrichtung 6.2 auf- und abschwenkbar. Das freie Ende des Rechens 6 weist außerdem eine Schürze 6.3 auf. Diese gleitet beim Schließen des Rechens entlang der Tragwand 3. Rechen 6 kann zum Einstellen des Pegels des Oberwassers verwendet werden. Im abgeklappten Zustand wird der Rechen 6 gereinigt. Sobald der Rechen 6 zum Unterwasser 9 geneigt ist und überströmt wird, wird der Schmutz mitgenommen.

Der Rechen 6 samt der Schürze 6.3 kann derart angehoben werden, dass der Spiegel des Oberwassers 8 angehoben wird. Damit kann der Oberwasserpegel geregelt werden. Siehe die strichpunktierte Darstellung des Oberwassers 8 - siehe Figur 3.

Bei den Ausführungsformen gemäß der Figuren 1 bis 3 sieht man, dass der Rechen 6 - in Strömungsrichtung gesehen - im Betriebszustand nach unten abfällt. Er ist somit stets von Wasser überströmt. Hierdurch wird er weitgehend sauber gehalten, ohne auf gesonderte Reinigungsgeräte zurückzugreifen.

Für eine solche Konfiguration ist die gezeigte Konfiguration von Stauwand 2 und Tragwand 3 günstig. Das stromaufwärtige Ende des Rechens 6 kann hierbei nämlich mit seinem stromaufwärtigen Ende an der Oberkante der Stauwand 2 angelenkt werden, und mit seinem stromabwärtigen Ende an der Oberkante von Tragwand 3 aufliegen oder anliegen. Die Oberkante der Stauwand 2 liegt somit auf einer größeren geodätischen Höhe als die Oberkante der Tragwand 3.

Man sieht dies auch gut aus Figur 4. Figur 4 zeigt ein Modul in perspektivischer Darstellung. Dieses ist in einem Stück aus Beton gegossen und zum Beispiel mit Kies ausgefüllt. Zwischen Stauwand 2 und Tragwand 3 befindet sich ein Zwischenraum. Stauwand 2 steht im Wesentlichen aufrecht. Tragwand 3 hingegen ist auf ihrer stromaufwärtigen Seite begrenzt durch eine geneigte Fläche, und auf ihrer stromabwärtigen Seite durch eine gekrümmte Fläche. An der geneigten Fläche lässt sich in oben beschriebener Weise die Energieeinheit 4 anordnen. Die Energieeinheit 4 ruht dabei aufgrund ihres Eigengewichtes zuverlässig auf der geneigten Fläche. Über die gekrümmte Fläche fließt das abströmende Wasser.

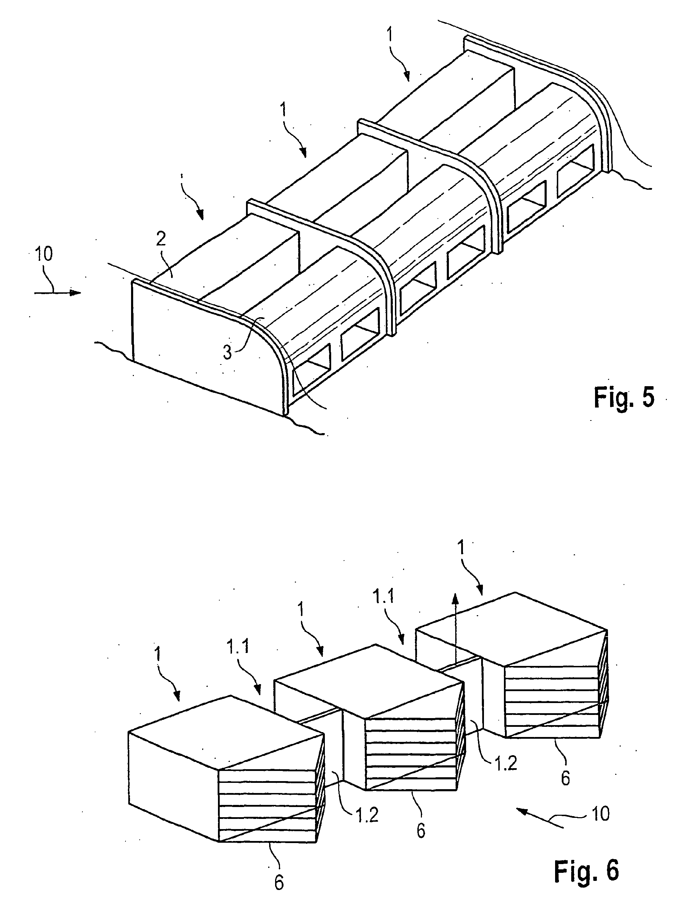

Figur 5 zeigt mehrere Module. Diese sind nebeneinander angeordnet, somit quer zur Strömungsrichtung 10 des Flusses.

Figur 6 zeigt wiederum drei Module stark vereinfacht dargestellt. Jedes Modul ist mit einem Pfeilrechen 6 ausgestattet. Zwischen zwei einander benachbarten Modulen befindet sich ein freier Zwischenraum 1.1. Dieser ist mit einem Absperrorgan 1.2 öffen- und schließbar. Das Absperrorgan 1.2 kann beispielsweise eine Dammtafel sein. Der Zwischenraum 1.1 dient als Kieskanal. Vor dem Absperrorgan 1.2 sammelt sich Geschiebe und Schwämmgut an. Dieses muss von Zeit zu Zeit entfernt werden. Zu diesem Zwecke werden die Dammtafeln 1.2 von Zeit zu Zeit in Richtung des vertikalen Pfeiles hochgezogen. Schwemm- oder Treibgut, das sich vor der Klappe angesammelt hat, gelangt mit der Strömung zum Unterwasser.

Bei geöffneten Dammtafeln 1.2 wird außerdem Schmutz mitgerissen, der sich in den Rechen 6 angesammelt hat.

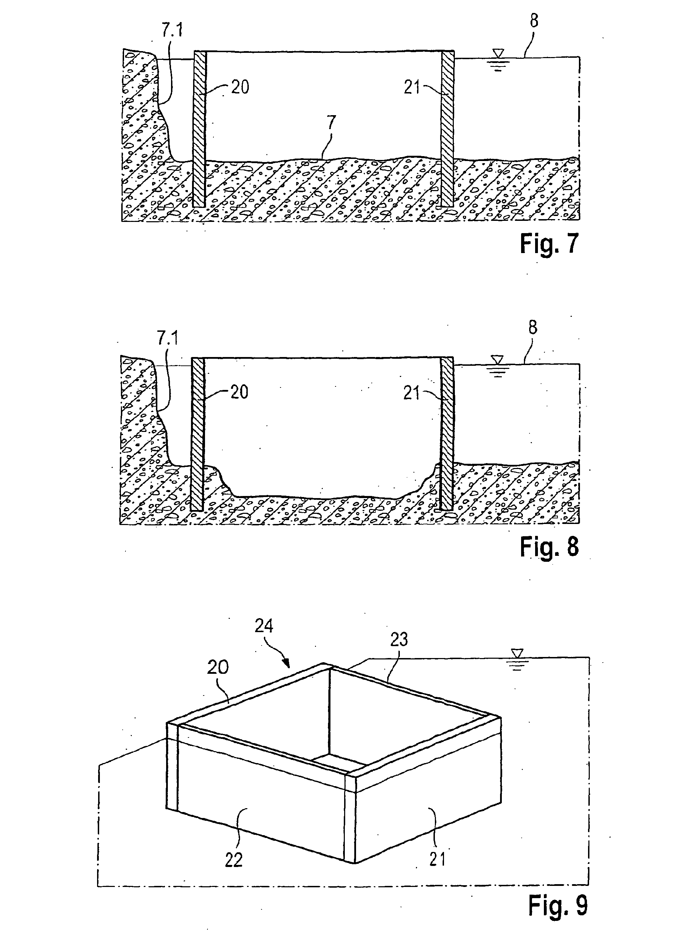

Die Figuren 7 bis 10 veranschaulichen Verfahrensschritte zum Durchführen eines ersten Verfahrens zum Errichten von Modulen. Dabei sind die Figuren 7 und 8 Vertikalschnitte durch ein Flussbett quer zur Strömungsrichtung. Man erkennt die Uferböschung 7.1, ferner wieder das Flussbett 7.

Bei der in Figur 7 dargestellten Arbeitsphase sind zwei Spundwände 20 und 21 in das Flussbett eingerammt und fixiert. Jede Spundwand ragt wenigstens bis zum Oberwasser 8 hoch, gegebenenfalls auch etwas darüber hinaus.

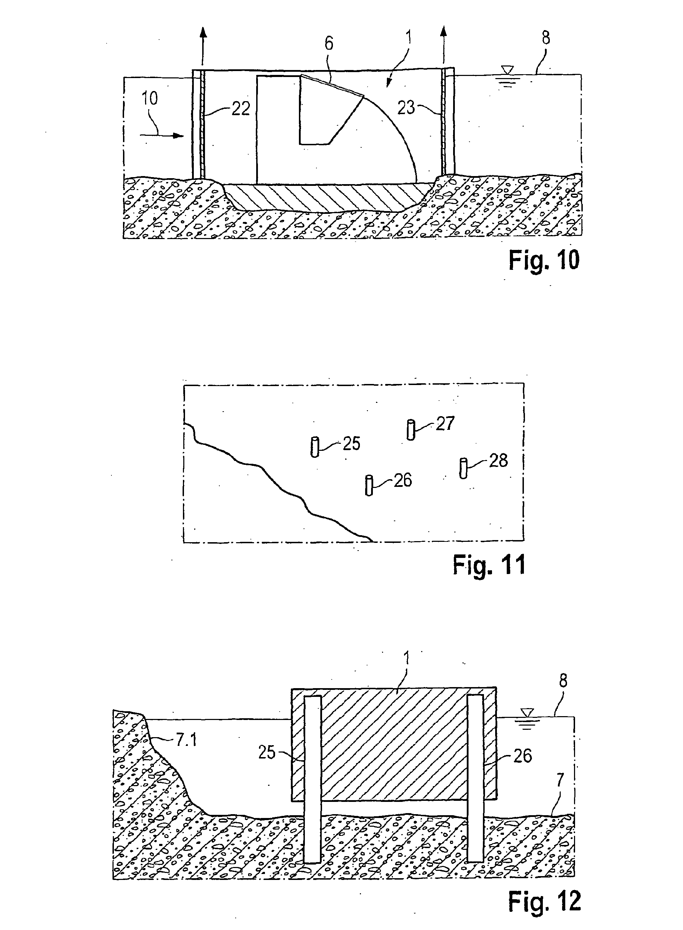

Die Spundwände 20, 21 sind im Flussbett 7 fest verankert. Sie verbleiben an Ort und Stelle und bilden somit einen tragenden Bestandteil des Kraftwerkes. Die Spundwände 20, 21 weisen jeweils an ihren Enden vertikale Nuten auf. In diese werden Dammtafeln 22, 23 eingeschoben. Siehe Figur 9. Nunmehr ist ein umschlossener Raum entstanden, und damit eine Baugrubenumschließung für ein erstes Modul. Siehe Figur 10. Die Baugrube kann nunmehr leer gepumpt werden. Außerdem kann ein Bett zur Fundamentierung der später eingesetzten Module ausgehoben und mit Magerbeton fundamentiert werden. Nunmehr kann auch ein erstes Modul in die Baugrube abgesenkt und auf das Magerbeton-Fundament aufgesetzt werden.

Alle genannten Bauteile, nämlich die Spundwände 20, 21 wie auch die Dammtafeln 22, 23 sind wieder verwendbar.

Die Spundwände 20, 21 verbleiben in der Regel für dauernd im Flussbett. Sie sind das tragende Element für den gesamten Damm.

Die Dammtafeln hingegen werden nach Beendigung der Bauarbeiten - siehe den in Figur 10 dargestellten Zustand - aus den genannten Vertikalnuten herausgezogen. Sie können später zu Wartungsarbeiten an den betreffenden Modulen wieder verwendet werden. Siehe in Figur 10 die beiden vertikalen, nach oben weisenden Pfeile, die das Herausziehen der Dammtafeln veranschaulichen.

Außerdem braucht man in der Regel nur zwei Dammtafeln 22, 23. Es wird nämlich zunächst eine erste Baugrube gebildet, und daran wird eine sich anschließende zweite Baugrube errichtet, wiederum mit einer oder mehreren (neuen) Spundwänden, aber mit den erstgenannten Dammtafeln 22, 23.

Es gibt eine zweite Möglichkeit ohne Errichten einer Baugrube. Diese besteht in Folgendem: Es werden zunächst Pfähle 25 bis 28 in das Flussbett gerammt-siehe Figur 11. Ein erstes Modul 1 wird in die Pfähle eingehängt und formschlüssig an diesen verankert. Siehe die Figuren 12, 13 und 14.

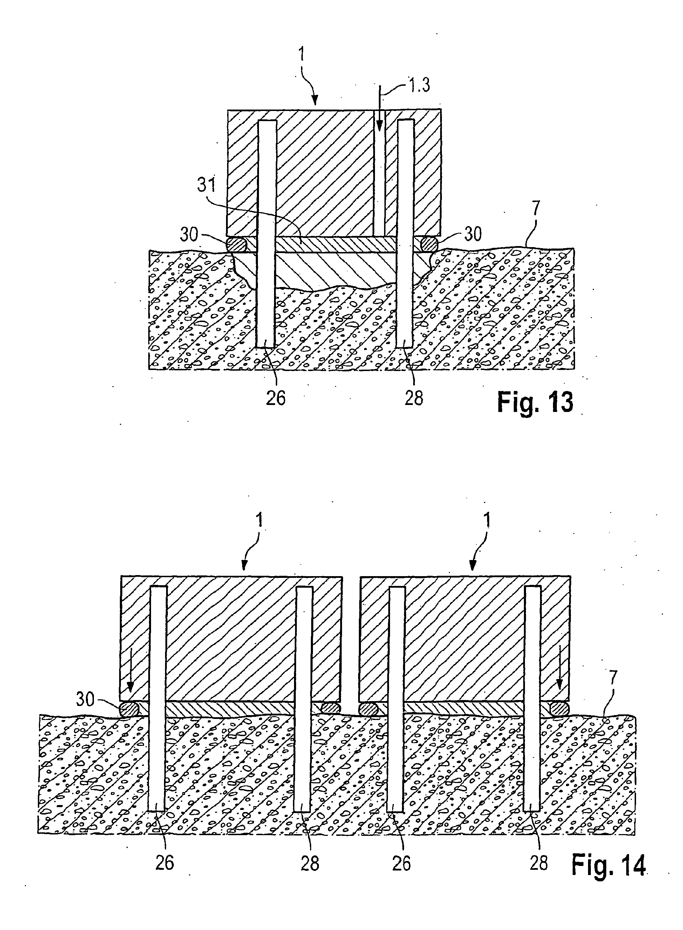

Wie man aus den Figuren 13 und 14 erkennt, befindet sich zwischen dem Flussbett 7 und dem Modul 1 ein Dichtkörper 30. Dieser ist ein mit Betonit gefüllter Gewebeschlauch. Er umgibt das betreffende Modul an dessen Außenumfang und umschließt damit einen Raum 31.

Raum 31 wird durch einen Einführkanal 1.3 mit einem geeigneten Material angefüllt, beispielsweise mit Magerbeton. Das Einfüllen erfolgt unter Pressdruck, sodass der in Raum 31 vorhandene Baugrund durch eindringenden Zement verfestigt wird. Die Verfüllung des Raumes 31 sowie die Festigung des Baugrundes unterhalb des Raumes 31 gegen Unterspülen des Moduls 1 kann auch mittels der als "Jet-Crouting" bekannten Hochdruck-Bodenvermörtelung erfolgen. Das Modul wird durch diese Maßnahme gegen Unterspülen gesichert.

Dichtung 30 kann auf jegliche Weise eingebracht werden, beispielsweise durch Fixierung am Boden des Moduls 1 vor dessen Einhängen in die Pfähle.

Es versteht sich, dass statt der Pfähle auch Wände verwendet werden. Im Übrigen verbleibt es aber bei der beschriebenen Prozedur des Einhängens der Module 1 und des Fundamentierens unter Zuhilfenahme der Abdichtung 30.

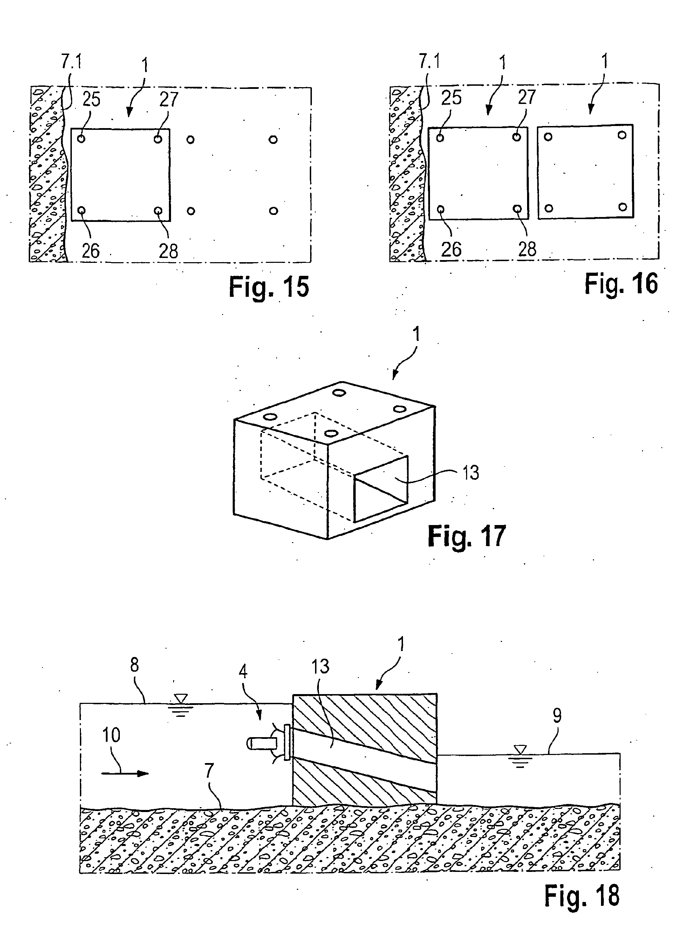

Die Figuren 17 und 18 veranschaulichen Beispiele für ein Fertigteil in sehr schematischer Darstellung, Figur 17 in einer perspektivischen Ansicht, und Figur 18 in einem vertikalen, in Strömungsrichtung gelegten Schnitt.

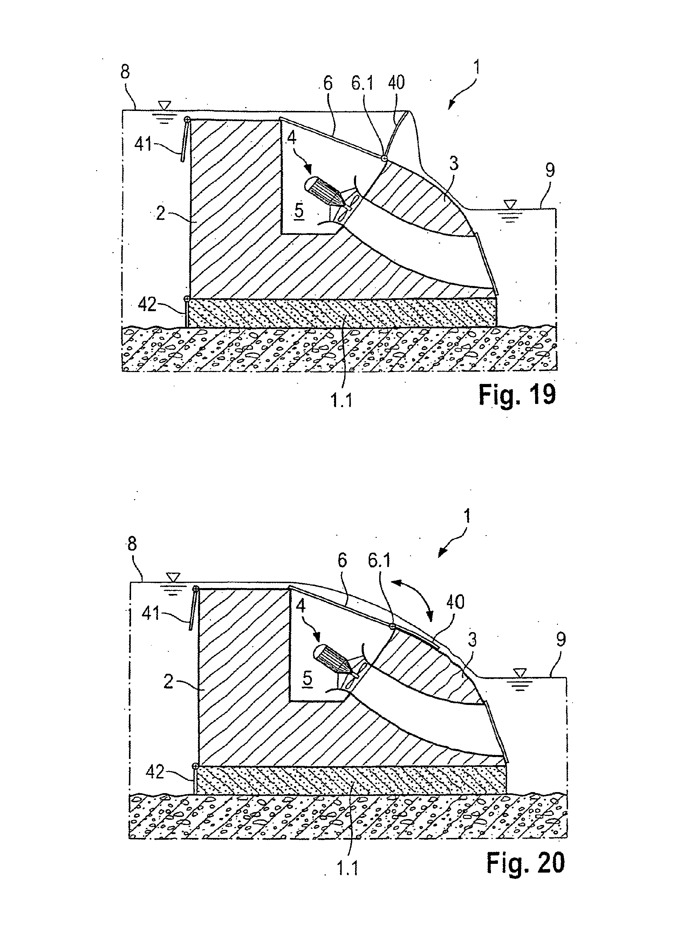

Das in den Figuren 19, 20 und 21 dargestellte Flusskraftwerk weist wiederum eine Stauwand 2 und eine Tragwand 3 auf. Unter dem Modul 1 befindet sich ein Kieskanal 1.1. Dieser kann aus mehreren Einzelkanälen bestehen, die parallel zueinander in Strömungsrichtung verlaufen.

Zwischen den beiden Wänden 2 und 3 ist wieder der Freiraum 5. Hier befindet sich die Energieeinheit 4. Die Anlage hat einen Rechen 6. Dieser ist im vorliegenden Falle an der Oberkante des Tragkörpers 3 angelenkt - siehe Gelenkpunkt 6.1. Der Gelenkpunkt könnte aber auch an der Oberkante der Stauwand 2 angelenkt sein, so wie bei den Figuren 1 und 3.

Am selben Gelenkpunkt 6.1 ist eine Stauklappe 40 angelenkt. Diese erstreckt sich über die gesamte Breite des Moduls 1. Sie dient zum Regeln des Oberwassers 8. Bei der Betriebsphase gemäß Figur 19 ist die Stauklappe 40 hochgeklappt. Demgemäß befindet sich der Pegel des Oberwassers 8 oberhalb der Oberkante von Stauwand 2.

Bei der Betriebsphase gemäß Figur 20 ist die Stauklappe 40 abgeklappt und ruht auf der Überströmfläche der Tragwand 3. In dieser Phase findet ein Reinigen des Rechens 6 statt.

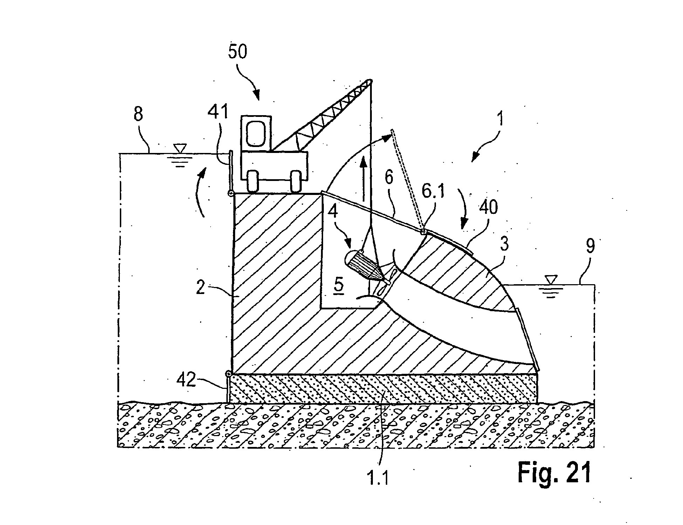

Bei der in Figur 21 dargestellten Betriebsphase ist die Stauklappe 40 wiederum abgeklappt. Rechen 6 wird sogleich hochgeklappt werden - siehe die gestrichelte Linie. Ein Kranfahrzeug 50 befindet sich auf der Krone der Tragwand 2 und ist bereit, die Energieeinheit 4 zum Zwecke von Wartungsarbeiten hochzuziehen und sodann an Land zu transportieren.

Man erkennt ferner eine weitere Stauklappe 41 an der angeströmten Oberkante von Stauwand 2. Diese ist bei den Figuren 19 und 20 abgeklappt, bei Figur 21 hochgeklappt, was während der Durchführung der Arbeiten mit dem Kranfahrzeug 50 notwendig ist.

Der Kieskanal 1.1 ist durch eine weitere Klappe 42 absperrbar. Er ist in der meisten Zeit des Betriebes abgesperrt, sodass die Klappe sich in der in den Figuren 19 und 20 dargestellten Position befindet. Zum Durchspülen des Kieskanales 1.1 wird die Klappe 42 hochgeschwenkt.

Statt der hier dargestellten schwenkbaren Klappen 40, 41, 42 können auch andere Elemente vorgesehen sein. So ist es denkbar, statt der Schwenkklappe einen Schieber vorzusehen, mit einer vertikal verlaufenden Schieberplatte, die aus der Tragwand aus und in diese wieder eingefahren werden kann. Gleiches gilt für die Klappe 41, wie auch für die Klappe 42.

Die Erfindung bringt zahlreiche Vorteile, die sich wie folgt zusammenfassen lassen:
- Der bauliche Aufwand und damit die Investitionskosten lassen sich drastisch senken. Hierzu tragen insbesondere die modulare Bauweise bei. Jedes Modul kann baugleich oder völlig identisch mit den anderen Modulen sein.
- Der gesamte Kraftwerksdamm kann sukzessive vom Ufer aus gebaut werden. Es wird zunächst ein erstes Modul in Ufernähe installiert. Dieses kann als Plattform für das Errichten eines benachbarten Modules genutzt werden, und so weiter, bis der gesamte Baudamm steht.
- Durch die Gestaltung der Rechen werden Wartungsarbeiten vereinfacht und damit verbilligt.
- Die Spundwände werden entgegen üblicher Bauweise nicht nur temporär verwendet. Vielmehr werden sie zum Bestandteil des Kraftwerkes, indem sie im Flussbett fest verankert bleiben und zum Tragen der gesamten Konstruktion wesentlich beitragen. Sie üben somit eine Doppelfunktion aus.
- Die modulare Bauweise erlaubt eine zeitliche Streckung der Ausführung des Kraftwerkes. So kann zunächst eine begrenzte Anzahl von Modulen gebaut werden, und es kann zu einem viel späteren Zeitpunkt - womöglich nach Jahren - das Kraftwerk durch Hinzufügen weiterer Module erweitert werden.

Die Module sind einteilig dargestellt. Jedoch kann jedes Modul auch aus zwei oder mehreren Teilen aufgebaut sein.

Die Modulbauweise lässt sich auch bei bestehenden Anlagen verwirklichen, zum Beispiel durch anhängen an ein stehendes Wehr.

### Bezugszeichenliste

- 1: Modul
- 1.1: freier Zwischenraum
- 1.2: Absperrorgan
- 2: Stauwand
- 3: Tragwand
- 3.1: Führungsnut
- 4: Energieeinheit
- 4.1: Kranhaken
- 4.2: Einlauftrichter
- 5: Zwischenraum
- 6: Rechen
- 6.1: Gelenkpunkt
- 6.2: Hubeinrichtung
- 6.3: Schürze
- 7: Flussbett
- 7.1: Uferböschung
- 8: Oberwasser
- 9: Unterwasser
- 10: Strömungsrichtung
- 11: Schicht aus Magerbeton
- 13: Saugkanal
- 13.1: Einhängezapfen
- 14: Klappe
- 20: Spundwand
- 21: Spundwand
- 22: Dammtafel
- 23: Dammtafel
- 24: Senkkasten
- 25: Pfähle
- 26: Pfähle
- 27: Pfähle
- 28: Pfähle
- 30: Dichtkörper
- 31: Zwischenraum
- 40: Stauklappe
- 41: Stauklappe
- 42: Absperrklappe
- 50: Kranfahrzeug

## Patentansprüche

1. Flusskraftwerk mit den folgenden Bauteilen beziehungsweise Merkmalen:
wenigstens ein Modul (1) oder mehrere autarke Module (1), die in Strömungsrichtung (10) nebeneinander angeordnet sind, jeweils umfassend wenigstens eine Energieeinheit (4);
jede Energieeinheit (4) umfasst eine Wasserturbine und einen Generator;
jedes Modul (1) umfasst eine stromaufwärtige, stehende Stauwand (2) sowie eine stromabwärtige Tragwand (3);
zwischen beiden Wänden (2, 3) befindet sich ein Zwischenraum (5);
ein Rechen (6), der sich zwischen der Oberkante der Stauwand (2) und der Oberkante der Tragwand (3) erstreckt und den Zwischenraum (5) abdeckt; an die Energieeinheit (4) ist ein Saugkanal (13) angeschlossen, **gekennzeichnet durch** die folgenden Merkmale:
die Energieeinheit (4) ist von der Tragwand (3) getragen und befindet sich im Zwischenraum (5);
der Zwischenraum (5) ist - in einem vertikalen, in Strömungsrichtung gelegten Schnitt - V-förmig;
die Energieeinheit (4) ist von oben her in die Tragwand (3) einsetzbar.

2. Flusskraftwerk nach Anspruch 1, **dadurch gekennzeichnet, dass** die Module (1) baugleich oder miteinander identisch sind.

3. Flusskraftwerk nach Anspruch 1, **dadurch gekennzeichnet, dass** Stauwand (2) und Tragwand (3) aus Beton bestehen.

4. Flusskraftwerk nach einem der Ansprüche 1 bis 3, **dadurch gekennzeichnet, dass** Stauwand (2) und Tragwand (3) im Bereich des Flussbettes (7) miteinander fest verbunden sind.

5. Flusskraftwerk nach Anspruch 4, **dadurch gekennzeichnet, dass** das Modul (1) auf einer Schicht (11) aus Magerbeton ruht.

6. Flusskraftwerk nach einem der Ansprüche 2 bis 6, **dadurch gekennzeichnet, dass** Stauwand (2) und Tragwand (3) aus einem einzigen Betonkörper gebildet sind.

7. Flusskraftwerk nach einem der Ansprüche 1 bis 6, **dadurch gekennzeichnet, dass** die Energieeinheit (4) am oberen Ende der Einlassöffnung des Saugkanales an die Tragwand (2) angelenkt und um eine horizontale Achse (13.1) verschwenkbar ist.

8. Flusskraftwerk nach einem der Ansprüche 1 bis 7, **gekennzeichnet durch** die folgenden Merkmale:
die Turbine ist nabenlos;
das Laufrad der Turbine ist in einer zur Drehachse der Turbine konzentrischen Hülse gelagert;
die Turbinenblätter sind mit ihren radial äußeren Enden an der Hülse fixiert;
die radial inneren Enden der Turbinenblätter bilden miteinander einen Durchlass zum Durchtritt von Schwämmgut.

## Claims

1. A run-of-river power plant with the following components or features:
at least one module (1) or several stand-alone modules (1), which are arranged close to one another in the flow direction (10), respectively comprising at least one energy unit (4);
each energy unit (4) comprises a water turbine and a generator;
every module (1) includes an upstream retaining wall (2) as well as a downstream bearing wall (3);
an intermediate space (5) is situated between both walls (2, 3);
a rake (6), which extends between the upper edge of the retaining wall (2) and the upper edge of the bearing wall (3) and covers the intermediate space (5);
a suction channel (13) is connected to the energy unit (4);
**characterized by** the following features:
the energy unit (4) is carried by the bearing wall (3) and is situated in the intermediate space (5);
the intermediate space (5) is V-shaped, in a vertical section positioned in flow direction;
the energy unit (4) can be inserted from above into the bearing wall (3).

2. A run-of-river power plant according to claim 1, **characterised in that** the modules (1) have the same design or are identical to each other.

3. A run-of-river power plant according to claim 1, **characterised in that** the retaining wall (2) and the bearing wall (3) are made of concrete.

4. The run-of-river power plant according to one of the claims 1 to 3, **characterised in that** the retaining wall (2) and the bearing wall (3) are fixedly connected together in the region of the riverbed (7).

5. A run-of-river power plant according to claim 4, **characterised in that** the module (1) rests on a layer (11) of lean concrete.

6. The run-of-river power plant according to one of the claims 2 to 6, **characterised in that** the retaining wall (2) and the bearing wall (3) consist of a single concrete body.

7. The run-of-river power plant according to one of the claims 1 to 6, **characterised in that** the energy unit (4) is articulated to the bearing wall (2) at the upper end of the inlet opening of the suction channel and can be swivelled around a horizontal axis (13.1).

8. The run-of-river power plant according to one of the claims 1 to 8, **characterised by** the following features:
the turbine is seamless;
the rotor of the turbine is mounted in a concentric bushing to the rotational axis of the turbine;
the turbine blades are fixed to the bushing with their radially external ends;
the radially internal ends of the turbine blades form together a passage for the penetration of floating debris.

## Revendications

1. Centrale hydroélectrique présentant les éléments ou caractéristiques ci-dessous:
au moins un module (1) ou plusieurs modules autonomes (1), qui sont agencés les uns à côté des autres dans le sens d'écoulement (10), comprenant chacun au moins une unité d'énergie (4);
chaque unité d'énergie (4) comprend une turbine à eau et un générateur;
chaque module (1) comprend une paroi de retenue (2) verticale en amont de même qu'une paroi porteuse (3) en aval;
entre les deux parois (2, 3) se trouve un espace intermédiaire (5);
une grille (6), qui s'étend entre le bord supérieur de la paroi de retenue (2) et le bord supérieur de la paroi porteuse (3) et recouvre l'espace intermédiaire (5);
une conduite d'aspiration (13) est raccordée à l'unité d'énergie (4), présentant les caractéristiques suivantes
l'unité d'énergie (4) est portée par la paroi porteuse (3) et se trouve dans l'espace intermédiaire (5);
l'espace intermédiaire (5) est en forme de V, vu en coupe verticale dans le sens d'écoulement;
l'unité d'énergie (4) peut être introduite dans la paroi porteuse (3) par le haut.

2. Centrale hydroélectrique selon la revendication 1, **caractérisée en ce que** les modules (1) sont de construction identique ou bien identiques les uns aux autres.

3. Centrale hydroélectrique selon la revendication 1, **caractérisée en ce que** la paroi de retenue (2) et la paroi porteuse (3) sont en béton.

4. Centrale hydroélectrique selon l'une des revendications 1 à 3, **caractérisée en ce que** la paroi de retenue (2) et la paroi porteuse (3) sont connectées solidement l'une à l'autre au fond du cours d'eau (7).

5. Centrale hydroélectrique selon la revendication 4, **caractérisée en ce que** le module (1) repose sur une couche (11) en béton maigre.

6. Centrale hydroélectrique selon l'une des revendications 2 à 6, **caractérisée en ce que** la paroi de retenue (2) et la paroi porteuse (3) sont constituées d'un simple corps de béton.

7. Centrale hydroélectrique selon l'une des revendications 1 à 6, **caractérisée en ce que** l'unité d'énergie (4) est articulée à l'extrémité supérieure de l'ouverture d'admission de la conduite d'aspiration au niveau de la paroi porteuse (2) et est pivotante autour d'un axe horizontal (13.1).

8. Centrale hydroélectrique selon l'une des revendications 1 à 7, présentant les caractéristiques suivantes:
la turbine est sans moyeu;
le rotor de la turbine est monté dans une douille concentrique par rapport à l'axe de rotation de la turbine;
les pales de turbine sont fixées à la douille par leurs extrémités radialement externes;
les extrémités radialement internes des pales de turbine constituent ensemble un passage pour le transit de matériau flottant.
